# EUROPEAN PATENT SPECIFICATION

(11) **EP 0 449 306 B1**
(45) Date of publication and mention of the grant of the patent: **07.02.1996**
(21) Application number: 91105062.3
(22) Date of filing: 28.03.1991
(51) Int. Cl.: H04N 1/40

(54) **Digital image forming apparatus**
Digitales Abbildungsgerät
Appareil numérique de formation d'images

(30) Priority: 30.03.1990 JP 85928/90
(43) Date of publication of application: 02.10.1991
(73) Proprietor: MITA INDUSTRIAL CO. LTD., Osaka-shi Osaka 540 (JP)
(72) Inventor: Horihata, Katsushi, Nada-ku, Kobe-shi, Hyogo (JP)
(74) Representative: Schwan, Gerhard, Dipl.-Ing.

(56) References cited:
- GB-A- 2 152 324
- US-A- 4 855 766

## Description

### BACKGROUND OF THE INVENTION

### Field of the Invention

This invention relates to an improvement of a digital image forming apparatus such as a digital copying machine and a digital printer, etc. and more particularly to a digital image forming apparatus by which the transfer density can be easily adjusted to the optimal density, for instance in the case that a photosensitive drum is deteriorated.

### Description of the Prior Art

In a general digital image forming apparatus, light which comes from the light source is reflected by a document. This catoptric light is imaged on an optical sensor like a CCD, etc, and this imaged document image is read by the above optical sensor and is converted to pixel signals. And these pixel signals are compared with the thresholds according to the kinds of characters, photographs, etc. and are outputted after having been converted to image data of black and white binary data. Transfer processing is executed by means of a photosensitive drum, etc. according to the image data, thereby causing the document image to be transferred onto a transfer paper like a sheet of paper, etc.

Usually, in the above digital image forming apparatus, an appointed compensation so-called "shading compensation", etc. which compensates the pixel signals which are read by the optical sensor is given thereto, for instance, in the lengthwise direction of the above light source, and each of pixel signals which corresponds to a document of a fixed brightness is data-processed so that all of the pixel signals can be equalized and become constant.

Therefore, even though the light source is deteriorated to become dark or the light source which has become dark is replaced and becomes bright, the image data corresponding to a fixed brightness can be kept constant by the data processing.

Hence, in a general image forming apparatus of analog system, for instance, as the sensitivity of a photosensitive drum is deteriorated, the density of a transfer image can be kept constant by reducing the light intensity of the light source, as disclosed in Japanese Patent Laid-Open Gazette No. Sho 62-136669 and in US-A-4 855 766.

However, in the conventional digital image forming apparatus, as the pixel signal of each of the pixels corresponding to a document of a fixed brightness is so compensated that they can be kept on a constant level, the level of pixel signals can be automatically compensated so as to compensate for reduction of the light intensity, which has been made as in the image forming apparatus of analog system, for instance, when the sensitivity of the photosensitive drum is deteriorated as shown in the above. Therefore, the image data is influenced by changes in the sensitivity of the photosensitive body drum, thereby causing the optimal density of the transfer image not to be secured. A digital image forming apparatus is disclosed in GB-A-2 152 324.

### SUMMARY OF THE INVENTION

It is therefore an object of the invention to provide such a digital image forming apparatus wherein the density of transfer images can be optimized even though the sensitivity of a photosensitive body is deteriorated.

In order to achieve the object, the invention provides a digital image forming apparatus as defined in the claim.

In the digital image forming apparatus, the threshold data is shifted by the data shifting means according to the shift volume appointed by the inputting means.

Therefore, as the pixel signals are outputted after having been compared with the threshold data shifted in the above and the image data is shifted according to the shift volume, it is possible to simply correct the density to the optimal level even when the density becomes improper due to a lowering of the sensitivity, for instance, by deterioration of a photosensitive drum, etc.

### BRIEF DESCRIPTION OF THE DRAWINGS

Fig. 1 is a block diagram showing an digital image forming apparatus according to an embodiment of the invention,
Fig. 2 is a flow chart showing one of the examples of data shift processing of the digital image forming apparatus of the invention,
Fig. 3 is a simulated view of description showing one of the examples of the threshold data of the digital image forming apparatus of the invention, and
Fig. 4 is a simulated view of description showing one of the examples of pixel signals compensated and processed by reading a certain character document by means of the digital image forming apparatus according to the invention.

### DETAILED DESCRIPTION OF THE PREFERRED EMBODIMENTS

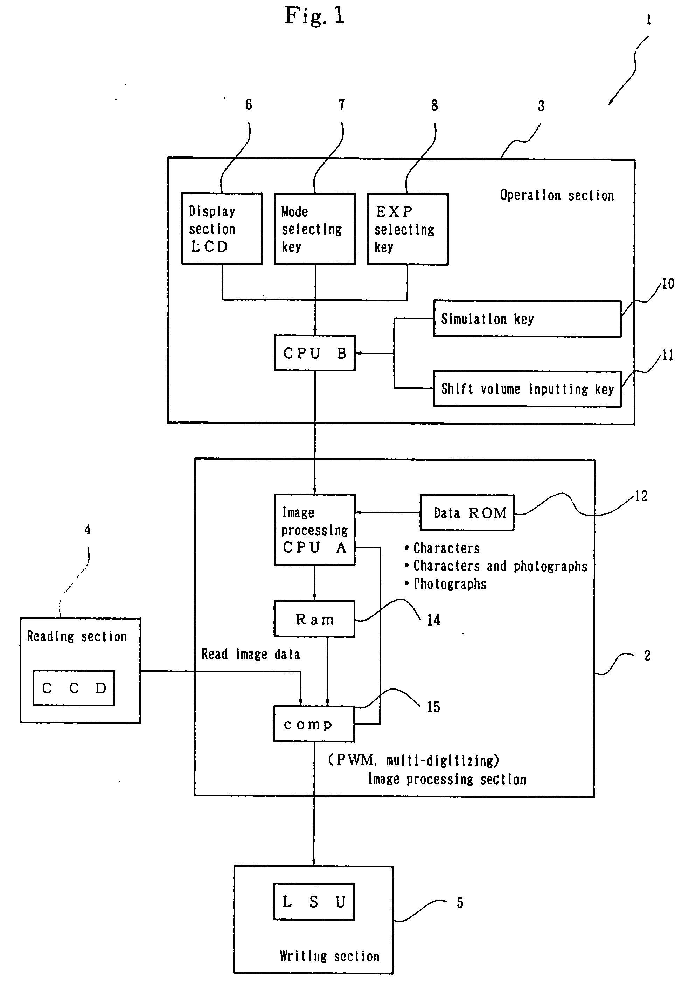

As shown in Fig. 1, the digital forming apparatus 1 of a digital copying machine, etc. according to the embodiment of the invention mainly comprises an image processing section 2 consisting of a micro computer CPU A, etc. Then, an operating section 3 consisting of a micro computer CPU B, etc. to give various kinds of operating commands, a reading section 4 consisting of optical sensors of a plurality of CCD, etc. to read a document image, and a writing section 5 for outputting the image data of document images, etc. to transfer and to process in compliance with the image-processed data are connected to the image processing section 2.

A display section 6 consisting of LCD, etc., a mode selecting key 7 for selecting and appointing a mode according to the kind of a document, a density selecting key 8 for selecting and appointing the stage of density of a document (of such a type as can appoint in stage the density of 15 stages from 1 through 15 as a matter of convenience in this embodiment), a simulation key 10 for changing the processing to a simulation processing as described later, and a shift volume inputting key 11 for inputting the shift volume as described later are connected to the micro computer CPU B in the operating section 3.

The shift volume inputting key 11 is one of the examples of the inputting means.

Furthermore, a ROM 12 for pre-memorizing the kinds of characters and photographs or mixtures thereof, which are selected by the mode selecting key 7, and the threshold data, etc. according to the density stages selected by the density selecting key 8, a RAM 14 for temporarily memorizing the threshold data, etc. which are read from the ROM 12, and a comparator 15, etc. for comparing the threshold data of the RAM 14 with the output signals of the reading section 4 are connected to the micro computer CPU A of the image processing section 2.

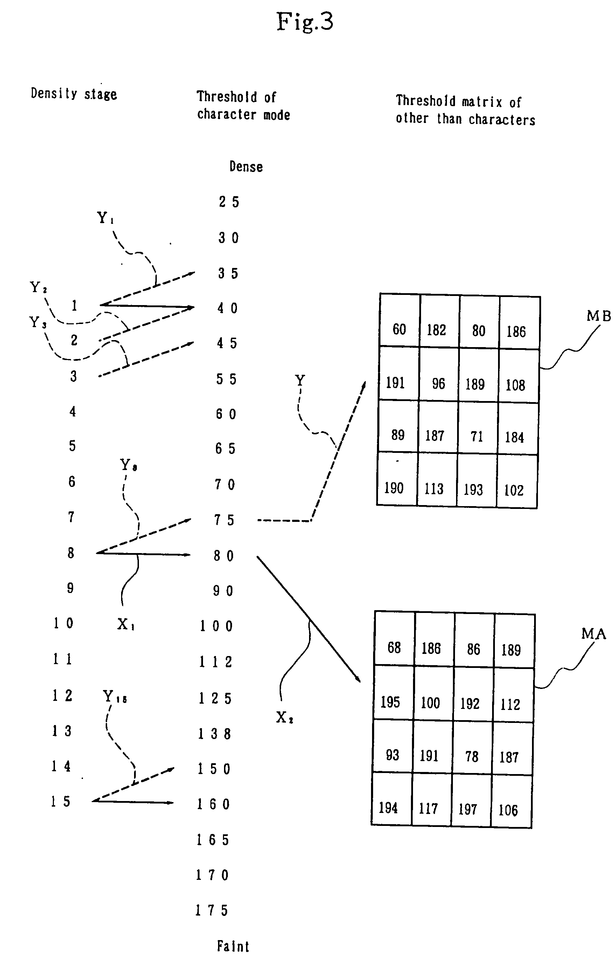

In the case that, for instance, the mode selecting key 7 is set to characters (or photographs, etc. other than characters) and the density stage of the density selecting key 8 is set to 8 (the central value), the threshold data is given 80 (or matrix MA) as shown with an arrow X₁ (or X₂) in Fig. 3, for instance.

### [On the shading compensation]

As in the digital image forming apparatus 1 a document of a fixed brightness, for instance, is set as well as conventionally and the operating section 3 is operated as appointed, the CCD, etc. is operated, thereby causing the imaged image of the document set in the above to be read. And a pixel signal per pixel corresponding to the document of a fixed brightness is outputted after having been so compensated and processed by the reading section 4 that the pixel signal can reach a constant level.

Therefore, even though the light source is deteriorated and becomes dark or becomes bright by replacement thereof which has become dark once, the pixel signals are compensated by the above processing so that the density data per pixel corresponding to a document of a fixed brightness can reach a constant level.

### [On usual transfer processing]

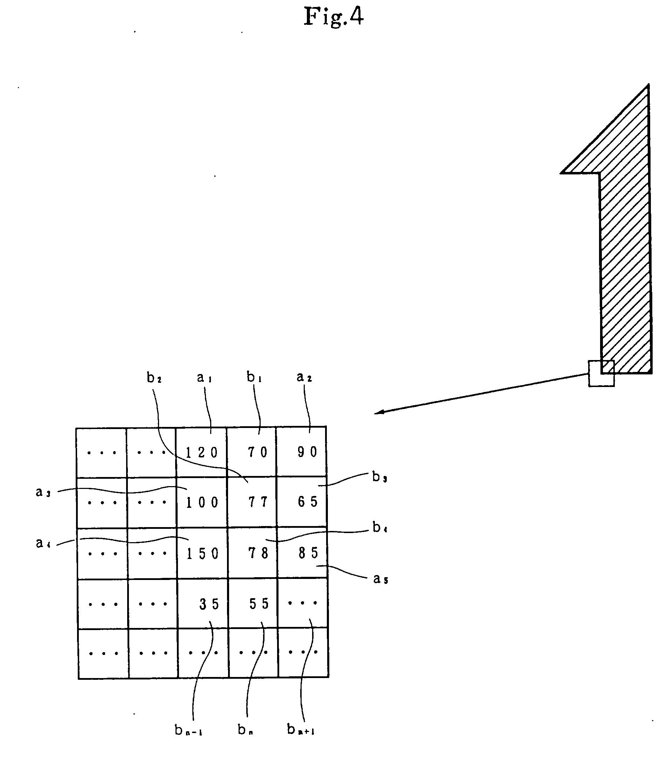

In usual transfer processing, each of the pixel signals of the output corresponding to the density of a document image is outputted from the reading section 4. For instance, it is assumed that the lower end corner of a numeral [1] of a character document is read as shown in Fig. 4, and the data of pixel signals compensated and processed in the above is 120, 70, 90, ... for instance.

At this time, in the case that the mode selecting key 7 is set to the mode of character document and the density stage of the density stage key 8 is set to 8, the pixel signals are compared with the threshold data 80 according to the above setting as shown below.

Namely, in the case the data of the pixel signals is more than 80, for instance an image data [Black] of one pulse width is outputted from the writing section 5 through the comparator 15.

Therefore, image data [Black] is outputted, corresponding to the parts a₁, a₂, a₃, .... of the document at the lower end corner of the numeral [1] shown in Fig. 4, and the image data [Black] is not outputted, corresponding to the parts b₁, b₂, b₃, ... thereof (that is, the parts are of [WHITE]).

And a laser beam oscillator (not illustrated herein), etc. of the digital image forming apparatus 1 is operated on the basis of the image data [Black] and [White] which comes from the writing section 5, thereby causing the transfer processing to be executed.

Furthermore, when it is assumed that the mode selecting key 7 is set to other mode than the character mode and the density stage of the density stage key 8 is set to 8, the pixel signals are compared with the matrix MA (Fig.3) of the threshold data according to the above setting as shown below.

Namely, the pixel signal data 120 of a document a₁ shown in Fig. 4 is compared with the threshold data 68, 70 of b₁ is compared with 186, 90 of a₂ is compared with 86,... 100 of a₃ is compared with 195, and 77 of b₂ is compared with 100. Then, in the case that these pixel signal data are more than respective threshold values, for instance, the image data [Black] of one pulse width is outputted from the writing section 5 through the comparator 15 as well as in the above description. And the digital image forming apparatus 1 carries out the transfer processing in compliance with the image data as well as in the above description.

Therefore, when the photosensitive drum is not deteriorated, the density of the image transferred and processed in the above as conventional becomes an appointed brightness.

### [On the simulation]

Next, in the digital image forming apparatus 1, it is possible to secure that the density of the transfer processing can be kept on an appointed brightness through executing the data shift processing by operating the simulation key 10 and the shift volume inputting key 11 on the operating section 3 as described later even though the photosensitive drum thereof is deteriorated or replaced.

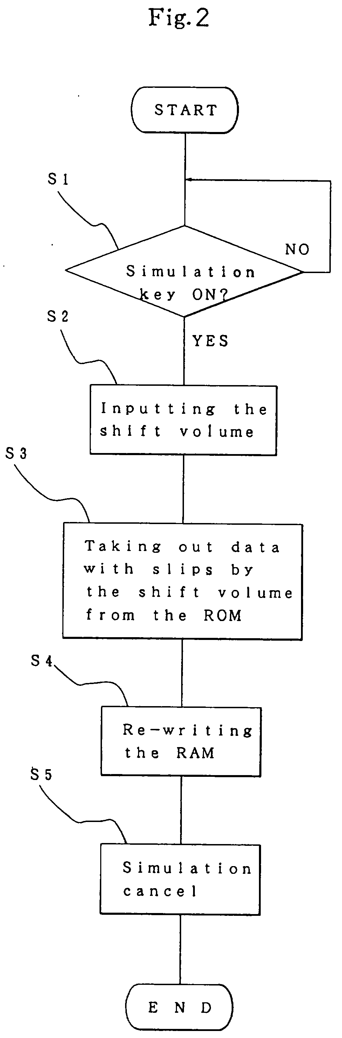

With reference to Fig. 2, the data shift processing procedure is described in the sequence of steps S1, S2, .... on simulation of this digital image forming apparatus 1.

For example, in the case that a servicing engineer, etc. judges that the density of the transfer image has been made fainter than the appointed brightness, for instance, due to deterioration of the photosensitive drum when the transfer processing in the digital image forming apparatus is executed with a character document set in a position while the density stage is at 8 and the mode is set to the character mode, the servicing engineer, etc. switches on the simulation key 10 (Step S1).

And the servicing engineer, etc. operates the shift volume inputting key 11 and sets, for instance, the data shift volume to [-1 stage], depending upon the degree of faintness of the transferred image (Step S2).

Then, all the threshold data in the RAM 14 is shifted responsive to the shift volume.

Namely, the threshold data 40 corresponding to the density stage 1 is shifted to the threshold data 35, and the threshold data is shifted to 40 for the density stage 2, to 45 for the density stage 3, and to 150 for the density stage 15 (Steps S3 and S4, in Fig. 3, Y₁, Y₂, ..... Y₁₅).

Therefore, the threshold data corresponding to the set density stage 8 becomes 75. Furthermore, in the case that the mode is not the character mode, the matrix MA is shifted to MB as well (the dashed line Y in Fig.3). In order to make the description comprehensive, the description copes with only the character mode.

Means for realizing the function by which the threshold data can be shifted, corresponding to the shift volume, for instance, [-1 stage] inputted by the shift inputting key 11 is one of the examples of the data shift means.

And as the simulation key 10 is cancelled (Step S5) and the operating section 3 is operated again as appointed, the CCD, etc. for instance, is actuated as mentioned in the above, thereby the data of pixel signals at the lower end corner of a numeral [1] of the character document which has been transferred and processed in the above is caused to be outputted, and is compared with the threshold data 75 memorized in the RAM 14 by the comparator 15.

Then, the image data [Black] is outputted for the parts a₁, a₂, a₃, ... of a document at the lower end corner of a numeral [1] shown in Fig. 4 and for the parts b₂, b₄ which are larger than the shifted threshold data 75.

Namely, even though in the digital image forming apparatus 1 the sensitivity of the photosensitive drum is deteriorated and the density of the transferred document becomes faint for the same pixel signals, the transferred document density can be kept constant in appearance by increasing the image forming area of the image data [Black] by shifting the threshold data.

Consecutively, the transfer image density is so adjusted by repeating the above procedure that the image data [Black] can be outputted, for instance, for the parts b₁ or b₃, thereby causing the optimal transfer image density to be secured with simplicity.

Furthermore, in the embodiment, though the threshold data is shifted by a servicing engineer, etc., the threshold data can be automatically shifted, for example, according to the detected density by detecting the density of the transferred image.

Moreover, in the embodiment, the threshold data of a character mode is of one data corresponding to the density stage. However, for instance, the threshold data of the density stage 8 is replaced with four threshold data 80, 148, 194 and 214, and in the case that respective pixel signals are from 80 to 148, from 148 to 194, and from 194 to 214, the image data [Black] of 1/4 pulse width, 1/2 pulse width, 3/4 pulse width and one pulse width can be outputted from the writing section 5 through the comparator 15, respectively.

In the case that such a setup as shown above is adopted, the transfer density can be adjusted by the pulse width control. Therefore, it is possible to adjust the density more accurately.

## Claims

1. A digital image forming apparatus comprising a plurality of optical sensors (CCD) for receiving light reflected from a document and for converting the received light into pixel signals representative of the sensed image of the document; and compensation processing means (12, CPU A, 14, 15) for keeping the pixel signals of each pixel corresponding to a document of a fixed brightness on a constant level when imaging the light reflected from said document on said optical sensors, said compensation processing means including means (15) for comparing said pixel signals with pre-memorized threshold data according to the kind of the sensed document and for outputting image data on the base of this comparison to transfer processing means (5) including a photosensitive member,
**characterized by**
means (11) for inputting a threshold data shift volume adapted to adjust the transfer density in said transfer processing means (5) to a selected level to compensate for disturbances such as changes in the sensitivity of said photosensitive member; and
data shifting means (10, CPU B, CPU A, 12, 14) for shifting said threshold data in response to the shift volume designated by said inputting means (11).

## Patentansprüche

1. Digitales Bilderzeugungsgerät mit einer Mehrzahl von optischen Sensoren (CCD) zum Aufnehmen von Licht, das von einer Vorlage reflektiert wurde, und zum Umwandeln des reflektierten Lichts in Pixelsignale, die repräsentativ für das erfaßte Bild der Vorlage sind; sowie mit einer Kompensationsverarbeitungsanordnung (12, CPU A, 14, 15), um die Pixelsignale von jedem Pixel, der einer Vorlage mit fester Helligkeit entspricht, auf einem konstanten Pegel zu halten, wenn das von der Vorlage reflektierte Licht auf den optischen Sensoren abgebildet wird, wobei die Kompensationsverarbeitungsanordnung eine Anordnung (15) aufweist, um die besagten Pixelsignale mit vorgespeicherten Schwellwertdaten gemäß der Art der erfaßten Vorlage zu vergleichen, und um Bilddaten basierend auf diesem Vergleich zu einer Übertragungsverarbeitungsanordnung (5) zu liefern, die ein lichtempfindliches Bauteil aufweist, gekennzeichnet durch
eine Anordnung (11) zum Eingeben eines Schwellwertdaten-Verschiebevolumens, das zum Einstellen der Überdagungsdichte in der Übertragungsverarbeitungsanordnung (5) auf einen bestimmten Pegel ausgelegt ist, um Störungen, wie z.B. Änderungen der Empfindlichkeit des lichtempfindlichen Bauteils, auszugleichen; und
eine Datenverschiebeanordnung (10, CPU B, CPU A, 12, 14) zum Verschieben der Schwellwertdaten in Abhängigkeit von dem mittels der Eingabeanordnung (11) eingestellten Verschiebevolumen.

## Revendications

1. Appareil numérique de formation d'image comprenant une pluralité de détecteurs optiques (CCD) pour recevoir la lumière réfléchie par un document et pour convertir la lumière reçue en signaux de pixel représentatifs de l'image détectée du document; et un moyen (12, CPU A, 14, 15) de traitement de compensation pour conserver les signaux de pixel de chaque pixel correspondant à un document d'une luminosité fixe, à un niveau constant, lors de la présentation de la lumière réfléchie par ledit document sur lesdits détecteurs optiques, ledit moyen de traitement de compensation comportant un moyen (15) pour comparer lesdits signaux de pixel avec des données de seuil pré-mémorisées en fonction du type de document détecté et pour délivrer des données d'image sur la base de cette comparaison à un moyen (5) de traitement de transfert comportant un élément photosensible,
**caractérisé par**
un moyen (11) pour l'introduction d'un volume de décalage de données de seuil apte à régler la densité de transfert dans ledit moyen (5) de traitement de transfert à un niveau sélectionné pour compenser des perturbations telles que des variations de la sensibilité dudit élément photosensible; et
un moyen (10, CPU B, CPU A, 12, 14) pour décaler lesdites données de seuil en réponse au volume de décalage désigné par ledit moyen d'introduction (11).
